Europäisches Patentamt

European Patent Office

Office européen des brevets

(11) Publication number: **0 272 722**
**A1**

(19)

## (12) EUROPEAN PATENT APPLICATION

(21) Application number: **87202289.2**

(22) Date of filing: **23.11.87**

(51) Int. Cl.⁴ **H04N 3/15**

(30) Priority: **25.11.86 NL 8602994**

(43) Date of publication of application:
**29.06.88 Bulletin 88/26**

(84) Designated Contracting States:
**BE DE FR GB IT LU NL**

(71) Applicant: **ELBICON N.V.**
**Industrieterrein Nieuwland**
**B-3220 Aarschot(BE)**

(72) Inventor: **Claeys, Corneel Leona Maurice**
**Molenveldplein 5**
**B-3800 Leuven(BE)**

(74) Representative: **Mommaerts, Johan Hendrik,**
**Dipl.-Phys.**
**Octrooibureau Lux Willem Witsenplein 4**
**NL-2596 BK Den Haag(NL)**

(54) A rectilinear radiation transducer.

(57) A rectilinear radiation transducer, comprising radiation sensitive cells arranged in a juxtaposed series, and means for converting the charges of these cells into processable output signals.

Each cell (2) is connected to an associated amplification element (6), said elements being connected to a common output resistor (17) over which the output signals appear, and, between a common supply terminal (16) and each amplification element (6), a switch (15) is arranged, the control inputs (14) of said switches (15) each being connected to an associated decoding element (7), to which decoding elements (7) periodically repeated and mutually different address code signals can be simultaneously supplied, each decoding element (7) being adjusted to one of said address signals, so that within said series always one of the decoding elements (7) responds to the associated address signal and the associated switch (15) is closed, and, moreover, between a common supply terminal (9) for the cells (2) and the connecting point (13) between a cell (2) and the control input (14) of the associated amplifier (6) a second switch (8) is inserted which is connected to a supply of clock signals having the repetition frequency of the address code signals, so that within a period of a clock pulse the second switch (8) is closed during the second half of the clock period, in order to recharge the associated cell (2) of which the charge condition is appearing at the control input (14) of the associated amplifier (6) during the first half of said clock period, the switches, amplifying and decoding elements being formed on the same semiconductor wafer (1) and laterally of the contiguous row of radiation sensitive cells (2) as integrated circuit elements.

In particular said transducer is adapted for converting x-rays, by means of scintillators arranged in window openings (5) in an absorbing covering plate (4).

_FIG. 2._

## A rectilinear radiation transducer.

Linear semiconductor radiation transducers are known, comprising a plurality of juxtaposed radiation sensitive cells, which cells, after being charged to a given voltage, are discharged again on being irradiated, the discharge within a given time depending on the intensity of the radiation incident on the cell. If charging takes place at a given repetition frequency, the radiation intensity can, thus, be measured at the location of a cell. The charges of the various cells can be converted into electrical signals which can be processed further.

Such transducers can, in particular, be constructed as a charge shift register, in which, responsive to suitable control voltages, the charges can be shifted towards adjacent cells and, eventually, towards an output, after which the radiation measurement can take place again. With such transducers a radiation picture can be linearly scanned and be converted into corresponding signals.

An application thereof is, for instance, following objects moved by means of a conveyor belt past an examination point, in which a radiation line is directed transversely to the direction of movement, and the rediffused radiation is directed, by means of an optical imaging system, towards such a linear radiation transducer. This optical system produces a suitable reduction of dimensions, which is adapted to the dimensions of the transducer. This reduction is desirable since the cell distance in such transducers is 10 $\mu$m or less, and the reduction factor is adapted to the desired resolution, and, moreover, a plurality of such transducers can be arranged in an aligned manner if the length of a transducer is not sufficient for covering the whole image.

However there are cases in which an optical reduction of dimensions is not possible. This is, for instance, the case in x-ray examination, in which a semiconductor transducer can be used which is provided with a scintillation layer, by means of which the x-rays can be converted into an another type of radiation for which the transducer is sensitive. An example thereof is the examination of meat for meat preserves for the presence of small bits of bone which, in particular in the case of food for babies or small children, can be dangerous. Since in the case of x-rays only a rectilinear imaging with a radiation point source is possible, for such applications transducers are to be used having dimensions which are adapted to an image ratio of 1 : 1 or more, and in which, for example, a cell distance of 400 $\mu$m is to be used. Linear transducers with a length of 50 mm comprise, then, 128 sensitive cells, which length has proved, for practical purposes, to be suitable for covering, with a relatively small number thereof, the width of a conveyor belt.

A disadvantage of such large transducers is that they can no longer be constructed as a charge shift register because of the relatively very substantial path lengths of the charges to be shifted and disturbances related thereto. An other objection is that, when producing semiconductor wafers, the risk of an unsatisfactory operation will not only increase with the complexity of the circuit structure but also with the surface area thereof, so that the production of such large transducers will be very uneconomical. Also the use of digital shift registers for scanning the transducer leads to difficulties because of the switching noise produced thereby.

The invention provides a radiation transducer for the last-mentioned purposes, which can be constructed as an integrated semiconductor circuit on a semiconductor wafer, and which does not have the draw-backs of the known radiation transducers having such large dimensions.

The rectilinear radiation transducer of the invention, comprising a series of radiation sensitive cells juxtaposed on a semiconductor wafer, and means for converting the charges of said cells into processable output signals, is, to that end, characterized in that each cell is connected to an associated amplification element, said amplification elements being connected to a common output resistor over which the output signals appear, and, between a common supply terminal and each amplification element, a switch is arranged, the control inputs of said switches each being connected to an associated decoding element, to which decoding elements periodically repeated and mutually different address code signals can be simultaneously supplied, each decoding element being adjusted to one of said address code signals, this in such a manner, that within said series always one of the decoding elements responds to the associated address signal, and the associated switch is closed, and, moreover, between a common supply terminal for the sensitive cells and the connecting point between a cell and the control input of the associated amplifier a second switch is inserted which is connected to a supply of clock signals having a frequency which corresponds to the repetition frequency of the address code signals in the periodic series, this in such a manner that within a period of a clock pulse the second switch is closed during the second half of the clock period, in order to recharge the associated cell of which the charge condition is appearing at the control input of the associated amplifier during the first half of said clock period, the switches, amplifying and decoding elements being formed on the same semiconductor wafer and laterally of the contiguous row of radiation sensitive cells as integrated circuit elements.

Since the various amplifiers are consecutively switched on by the associated switches if the address code corresponds to the address code adjusted in the associated decoding element of the associated amplifier, a series of pulses will appear over the common output resistor, the reference level thereof corresponding to the condition of an amplifier during charging of a sensitive cell during the second half of a clock period, and the intermediate signal values corresponding to the charge condition of a sensitive cell detected during the first half of a clock period, the pulse ratio of the output signal series being, for instance, about 0,5.

Each decoding element consists, in particular, of an AND gate or an OR gate with as many stages as there are digits in an address code, the address code source for each digit having two output lines on which consecutively the corresponding digits or their inverse values respectively of the addresses will appear in parallel form, each line leading towards the control inputs of the gates of all decoding elements corres ponding to the respective digit place, in each decoding element the control input of a gate being connected only with that digit line which, in the case of the correct address composition, applies thereto such a signal that, in the case of an AND gate, the stage in question is closed, and in the case of an OR gate the stage in question is opened. In the former case a control signal is transferred towards the switch in order to close it, and in the latter case a blocking signal is removed therefrom. A particular security can be obtained by connecting in series an AND as well as an OR gate, so that in case of a deviating address the control input of the switch is maintained at a blocking voltage.

In order to restrict charging of each sensitive cell to the measuring period proper only, an additional switch can be included in series with the switch responding to the clock pulses, said additional switch only being closed in the case of receiving the correct address code.

It depends on the character of the processing circuits whether, in the case of a plurality of aligned transducers of the above-mentioned kind, reading the measurement results will take place simultaneously or consecutively; in the latter case the address code should comprise additional digits for characterising the various transducers.

In the case of transducers used for converting x-rays, the semiconductor wafer is provided with a cover plate made of lead or an other absorbing material, in which at the location of the sensitive cells window apertures are provided in which the scintillators serving for converting the x-rays are arranged, so that only the latter will be exposed to the x-rays.

The invention will be elucidated below in more detail by reference to a drawing, showing in:

Figs. 1A and B a diagrammatical view and cross-section respectively of a portion of a transducer according to the invention;

Fig. 2 a simplified circuit diagram of such a transducer; and

Fig. 3 a more detailed circuit diagram of a portion of Fig. 2.

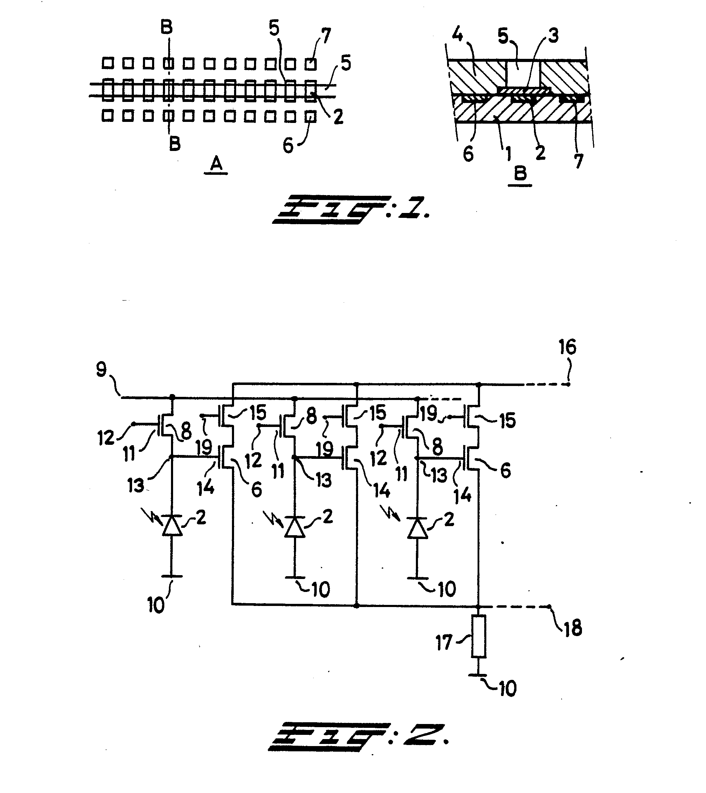

A transducer according to the invention comprises, as shown in a simplified manner in Fig. 1, a semiconductor wafer 1, in which a plurality of radiation sensitive cells 2 is formed. De centre distance of said cells is for instance about 400 $\mu$m, so that 128 cells can be formed on a wafer with a length of 50 mm. The width of the wafer is for instance 4 mm. At least the cells 2 are covered with a layer 3 of scintillation material in order to allow the x-rays to be converted into radiation for which the cells 2 are sensitive. On the layer 3 a mask 4 of lead or a similar absorbing material is arranged, in which, at the location of the cells 2, a through window 5 is formed so that x-rays will only be incident on the cells 2. Laterally of the window 5 additional circuit elements are formed in the wafer 1, such as amplifiers 6 and decoding elements 7, which are, in the manner known from the semiconductor technology, electrically connected to the cells 2 as will be elucidated below in more detail.

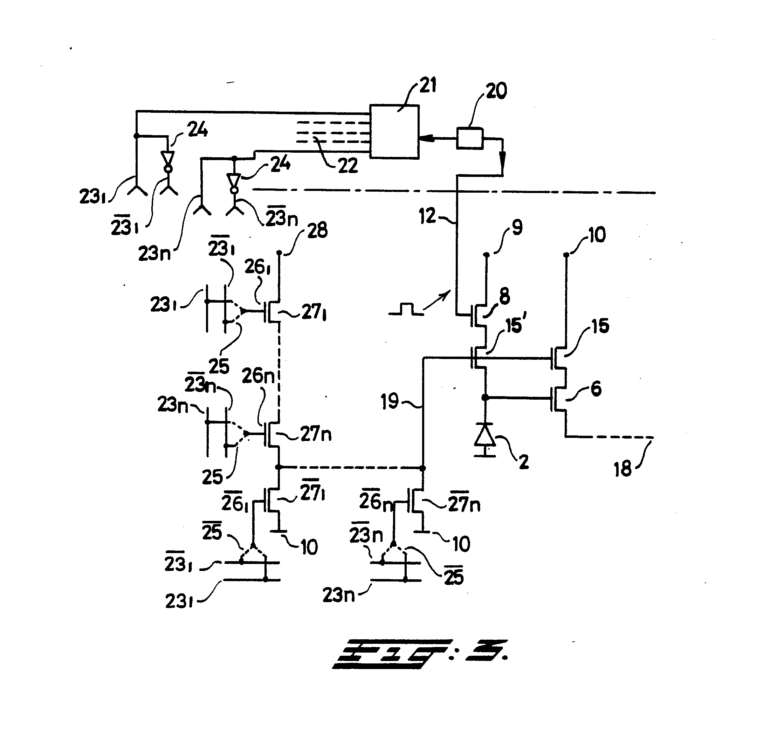

In Fig. 2 a simplified circuit diagram of such a transducer is shown. Each cell 2, which is shown as a radiation sensitive diode, is connected, in series with a field effect transistor 8, between a supply terminal 9 common to all the cells 2 and the common ground 10, the control electrodes 11 of the various transistors 8 being connected with a terminal 12 which is to be connected with an external clock pulse source. The connecting point 13 between the transistor 8 and the cell 2 is connected with the control electrode 14 of an associated amplifier 6, which is also formed as a field effect transistor and which, by means of a field effect transistor 15, connects with a supply terminal 16 common to all the cells, said transistor 6, on the other hand, being connected with a common resistor 17 which, on the other hand, is grounded at 10, the common extremity of said resistor 17 forming the signal output 18 of the transducer. The control electrode 19 of a transistor 15 is connected with an output of an associated decoding element 7 as will be described below in more detail.

If the cells 2, by making the associated transistors 8 conducting, have been charged, this charge will be reduced upon the incidence of radiation, which will lead to a change in the conductivity of the associated transistor 6. If the associated switching transistor 15 has been made conductive by the associated decoding element 7, at the output 18 a corresponding signal will appear in the form of a voltage reduction if the transistor 8 is non-conducting. As soon as said transistor 8 has become conducting again, the cell 2 will be recharged, and the voltage at the output 18 will increase again to the reference level.

At this moment the decoding element 7 of the cell in question becomes inoperative, and that of the next cell 2 becomes operative, so that, then, the measurement signal of the next cell will appear at the output 18. Switching over the decoding elements 7 appears under control of the same clock pulses, so that, at the output 18, a signal will appear having a pulse ratio, i.e. the ratio between the duration of the pulses and the pulse gaps , will be 0,5. It is, of course, also possible to choose this ratio otherwise.

The decoding elements 7 are constructed in such a manner that they will deliver, at the receipt of a specific address code, the control signal for the associated transistor 15, so that the latter, during the complete period of the clock pulse series, will become conductive, and, thus, the amplifying transistors 7 will be consecutively made operative, the transistors 8 which are controlled by the clock pulses then providing for charging the cells 2.

The various circuit elements can be integrated in the manner known from the semiconductor technology in the same semiconductor wafer 1, and then provisions can be made for excluding parasitic capacities as much as possible, so that a very fast switching can be obtained. In contrast to charge shift registers, in this case no charges are to be transferred over substantial distances, so that also for this reason a fast operation is ensured, and disturbing influences such as noise can be suppressed as much as possible.

In Fig. 3 a portion of the diagram of Fig. 1 relating to a cell 2 is represented, as well as a diagrammatical representation of a preferred embodiment of a decoding element 7 with a simplified representation of an external addressing circuit.

This addressing circuit consists, in principle, of a clock circuit 20, which can also supply clock pulses to the terminal 12, and which controls a logic circuit 21 which is adapted to consecutively deliver different address codes consisting of n digits, which appear at n output wires 22, the latter each being connected with an associated wire $23_1..23_n$. From each of said wires a second wire $\overline{23}_1.. \overline{23}_n$ is branched by means of an inverter 24. If a signal "1" appears at a wire $23_i$, at the associated wire $\overline{23}_i$ a signal "0" will appear and vice versa. The wires 23$_i$ and $\overline{23}_i$ are, as

shown at 25 and $\overline{25}$ resp., both connected with the control electrode $26_i$ of an associated transistor $27_i$, which transistors 27 form an AND gate, all control electrodes $26_i$ of corresponding transistors $27_i$ of other decoding elements of the other cells 2 being connected in a multiplex connection. Said wires $23_i$ and $\overline{23}_i$ are connected, in a corresponding manner, with control electrodes $\overline{26}_i$ of a series of transistors $\overline{27}_i$, which, in common, form an OR gate. The series of transistors $27_i$ is, as shown, connected at one end with a supply terminal 28, the other end thereof being grounded at 10 by means of the series $\overline{27}_i$.

Of the double connections 25 and $\overline{25}$ of the transistors 27 and $\overline{27}$ resp. only one will be realised (e.g. by etching contact holes), so that, if in the logic circuit 22 the address code for the cell 2 in question appears, a "1" will appear at all control electrodes 26, and a signal "0" will appear at all control electrodes $\overline{26}$. This means that the AND gate becomes conducting, and the OR gate becomes non-conducting, so that, at the wire 19 for the switching transistor 15, the voltage of the terminal 28 will appear, so that this transistor 15 becomes conducting. In series with the cell 2 an additional transistor 15' is shown, the control electrode of which being connected with the control electrode of the transistor 15, so that both will simultaneously become conducting or non-conducting. In this manner it is prevented that the diode 2 will be charged outside the measurement period, so that, then, the complete scanning period of the cell series will be available for discharging.

If a different address code than the code of the cell 2 in question appears on the wires 23 and $\overline{23}$ , always at least one of the transistors 27 will be non-conducting and at least one of the transistors $\overline{27}$ will be conducting, so that, then, the control terminal 19 will be kept at zero voltage, and the transistors 15 and 15' remain non-conducting.

It will be clear that also other decoding circuits can be used for the address codes, and that it would be also possible to use only an AND or only an OR gate respectively, but the circuit arrangement shown operates absolutely safely, and prevents the accumulation of disturbing charges at the control electrodes 19.

The field effect transistors shown in the diagrammatic drawing are only given by way of example, and can, of course, be replaced by other transistor types.

In this manner it has become possible to assemble, in a simple manner, relatively large radiation transducers which, in a very efficient, dependable and rapid way can be switched.

The address code used is preferably a Gray code, i.e. a binary code in which, at any transition towards a next number, only one digit is changed, this in contrast to the normal binary code in which at some transitions many digits, and in other ones only one digit is changed (cfr., for instance, 7-8 and 2-3). Each transition leads to switching noise which, in the normal code, will therefore be in some points much stronger than in other points (so-called fixed pattern noise), whereas with the Gray code this noise will be equal in all points and at a minimum.

## Claims

1. A rectilinear radiation transducer, comprising a series of radiation sensitive cells arranged in a juxtaposed series, and means for converting the charges of these cells into processable output signals, **characterised** in that each cell (2) is connected to an associated amplification element (60, said amplification elements (6) being connected to a common output resistor (17) over which the output signals appear, and, between a common supply terminal (16) and each amplification element (6), a switch (15) is arranged, the control inputs (14) of said switches (15) each being connected to an associated decoding element (7), to which decoding elements (7) periodically repeated and mutually different address code signals can be simultaneously supplied, each decoding element (7) being adjusted to one of said address signals, this in such a manner, that within said series always one of the decoding elements (7) responds to the associated address signal, and the associated switch (15) is closed, and, moreover, between a common supply terminal (9) for the sensitive cells (2) and the connecting point (13) between a cell (2) and the control input (14) of the associated amplifier (6) a second switch (8) is inserted which is connected to a supply of clock signals having a frequency which corresponds to the repetition frequency of the address code signals in the periodic series, this in such a manner that within a period of a clock pulse the second switch (8) is closed during the second half of the clock period, in order to recharge the associated cell (2) of which the charge condition is appearing at the control input (14) of the associated amplifier (6) during the first half of said clock period, the switches, amplifying the decoding elements being formed on the same semiconductor wafer (1) and laterally of the contiguous row of radiation sensitive cells (2) as integrated circuit elements.

2. The transducer of claim 1, **characterised** in that each decoding element (7) consists, in particular, of an AND or an OR gate (27, $\overline{27}$ ) with as many stages as the digits in an address code, the address code source (22) for each digit having two output lines (23, $\overline{23}$ ) on which consecutively the corresponding digits or their inverse values respectively of the addresses will appear in parallel form, each line leading towards the control inputs (26, $\overline{26}$ ) of the gates of all decoding elements corresponding to the respective digit place, in each decoding element the control input (26, $\overline{26}$ ) of a gate being connected only with that digit line (23, $\overline{23}$ ) which, in the case of the correct address composition, applies thereto such a signal that, in the case of an AND gate, the stage in question is closed, and in the case of an OR gate the stage in question is opened.

3. The transducer of claim 2, **characterised** by an AND as well as an OR gate which are connected in series.

4. The transducer of any one of claims 1..3, **characterised** in that in series with the switch (8) responding to the clock pulses an additional switch (15′) is inserted which is only closed at the receipt of the correct address code.

5. The transducer of any one of claims 1..4 for converting x-rays, **characterised** in that the semiconductor plate (1) is provided with a covering plate (4) made of lead or an other absorbing material, in which at the location of the sensitive cells (2) a window opening (5) is provided, in which scintillators used for converting the x-rays are arranged.

FIG:1.

FIG:2.

FIG: 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 128 828  (THOMSON-CSF)<br>* Page 5, line 3 - page 6, line 3; page 11, lines 11-18; figures 1,4 * | 1 | H 04 N    3/15 |
| A |  | 2-4 | |
| | ----- | | |

TECHNICAL FIELDS
SEARCHED (Int. Cl.4)

H 04 N
H 01 L

The present search report has been drawn up for all claims

| Place of search | Date of completion of the search | Examiner |
|---|---|---|
| THE HAGUE | 02-03-1988 | BEQUET T.P. |

EPO FORM 1503 03.82 (P0401)